(19) **Europäisches Patentamt**

**European Patent Office**

**Office européen des brevets**

(11) **EP 1 508 744 A1**

(12) **EUROPEAN PATENT APPLICATION**
published in accordance with Art. 158(3) EPC

(43) Date of publication:
**23.02.2005 Bulletin 2005/08**

(21) Application number: **03733215.2**

(22) Date of filing: **30.05.2003**

(51) Int Cl.⁷: **F23D 14/22**

(86) International application number:
**PCT/JP2003/006884**

(87) International publication number:
**WO 2003/106894 (24.12.2003 Gazette 2003/52)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **30.05.2002 JP 2002157437**

(71) Applicant: **Tamura, Tetsuto
Kasukabe-shi, Saitama 344-0066 (JP)**

(72) Inventor: **Tamura, Tetsuto
Kasukabe-shi, Saitama 344-0066 (JP)**

(74) Representative: **Weiss, Peter, Dr.
Zeppelinstrasse 4
78234 Engen (DE)**

(54) **ULTRASONIC JET BURNER**

(57)    A supersonic jet burner by the present invention comprises a cylindrical burner main body 1 having a combustion path on its central axis; a fuel filling nozzle unit 3 arranged at a base of the main body, wherein a tip nozzle of the nozzle unit 3 is arranged to face a base of the combustion path; a first combustion chamber 4 formed ahead of the nozzle unit; a plurality of first air ejecting ports A circularly arranged so as to surround the first combustion chamber and facing to the combustion path so as to form a swirling combustion flow section X; a circularly arranged plurality of second air ejecting ports B capable of ejecting whirling flows of high pressure air heated in a high pressure air flowing passage 15 formed around the outer periphery of the main body 1 so as to form a whirling high temperature combustion section Y; a second combustion chamber 21 arranged ahead of the whirling high temperature combustion section Y; a narrowly drawn shock wave conversion section Z for raising a flow rate of combustion gas up to more than the sonic speed formed as the tip of the cylindrical main body 1.

FIG. 1

**Description**

[Field of the Invention]

The present invention relates to a supersonic jet burner capable of generating shock waves.

[Related Art]

Such a supersonic jet burner is described, for example, in Japanese laid open patent No.2000-39126. In this invention, objects to be treated such as wastes are decomposed thermally and crushed by shock waves at a high temperature.

Japanese laid open patent No.2000-74317 is known as an invention, in which steam with a supersonic speed generated from superheated steam forcibly impinges on hydrated materials in the from of shock waves so that hydrated materials are crushed and dried instantly.

However, since the jet burner disclosed in the former invention is used for the thermal decomposition and the shock wave crushing, heat efficiency of the jet burner is poor, namely, fuel is consumed more than required, and a shock wave generating efficiency by the burner is poor. And since the flash dryer in the latter invention generates superheated steam with a supersonic speed, which means steam is essential, the invention cannot be widely utilized.

The present invention is carried out in view of problems mentioned above and can provide a supersonic jet burner applicable to any desired type of fuel. A combustion chamber capable of forming a swirling combustion flow section in a combustion path by uniformly supplied high pressure air is arranged in the supersonic jet burner, and a swirling high pressure air passes to a second combustion chamber via a whirling high temperature combustion section formed in-between. The supersonic jet burner can deliver shock waves via its opening where a shock wave conversion section in a narrowly drawn form is arranged in order to raise a flow rate of combustion gas more than the sonic speed. The present invention can provide a supersonic jet burner capable of being utilized in almost all applications such as grinding, crushing almost all kinds of materials and the like.

[Disclosure of the Invention]

Technical substance of the present invention is as follows.

(1) A supersonic jet burner comprising: a cylindrical burner main body having a combustion path on its central axis; a fuel filling nozzle unit arranged at a base of the burner main body, wherein a tip nozzle of the nozzle unit is arranged to face a base of the combustion path; a first combustion chamber formed ahead of the nozzle unit; a plurality of first air ejecting ports circularly arranged so as to surround the first combustion chamber and facing to the combustion path so as to form a swirling combustion flow section; a circularly arranged plurality of second air ejecting ports capable of ejecting whirling flows of high pressure air heated in a high pressure air flowing passage formed around the outer periphery of the burner main body so as to form a whirling high temperature combustion section; a second combustion chamber arranged ahead of the whirling high temperature combustion section; a narrowly drawn shock wave conversion section for raising a flow rate of combustion gas up to more than the sonic speed formed as a tip hole of the circular burner main body.

(2) The supersonic jet burner according to (1), wherein: an ignition nozzle unit capable of introducing ignition gas and auxiliary air having an ignition plug is arranged in the first combustion chamber and the tip of the ignition nozzle unit is bent directing to the tip of the fuel filling nozzle unit so as to eliminate influence from the swirling combustion flow section.

(3) The supersonic jet burner according to (1), wherein: the base of the burner main body is formed as a circular base plate to which a plurality of air importing pipes are attached outwardly; the other end of the air importing pipes are communicated with an air distribution circular pipe unit which is connected to a high pressure combustion air supply means; and the circular base plate is connected to a high pressure air passage arranged around a cylindrical portion of the burner main body so as to eject required respective amounts of supplied air to the air passage from the first air ejecting ports and second air ejecting ports respectively.

(4) The supersonic jet burner according to (3), wherein: the cylindrical portion of the burner main body comprises an inner cylindrical body having the combustion path, an intermediate cylindrical body and an outer cylindrical body; the high pressure air passage runs a gap between the inner cylindrical body and the intermediate cylindrical body, then runs a gap between the intermediate cylindrical body and the outer cylindrical body via a cutout portion of the intermediate cylindrical body; wherein: high pressure air in the high pressure air passage receives heat from highly heated combustion gas in the combustion path so that heated high pressure air by the heat exchange can be ejected from the second air ejecting ports ahead of the first combustion chamber as highly heated and pressured combustion air.

(5) The supersonic jet burner according to (1) or (3), wherein: plurality of the first and second air ejecting ports are arranged around the combustion path with respectively uniform pitches and the air ejecting holes are formed as tilted holes in the form of nozzle directing ahead.

[Brief Description of the Drawings]

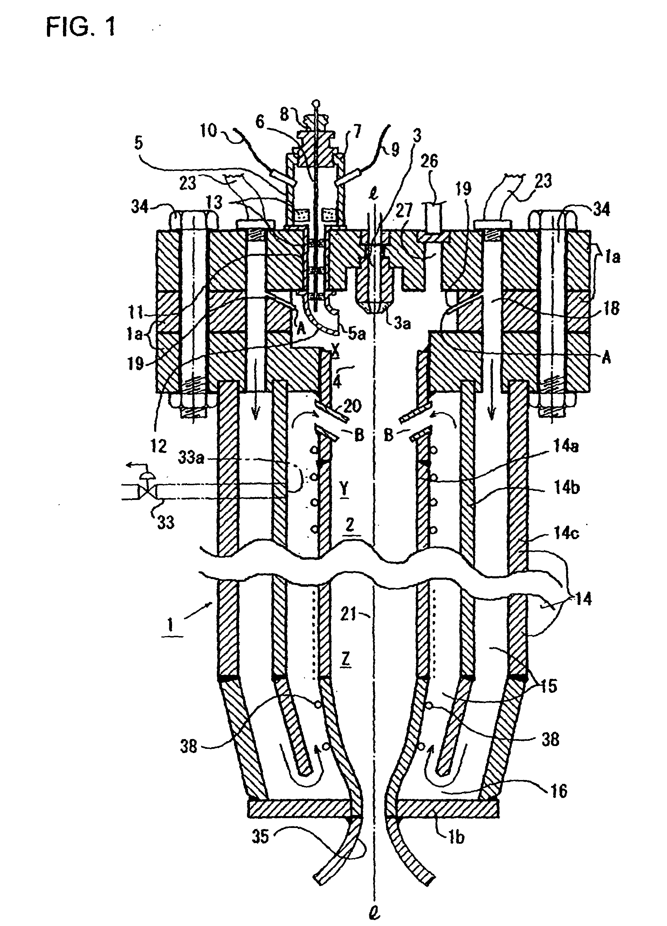

FIG.1 is a partially exploded longitudinal sectional view of the supersonic jet burner as an embodiment by the present invention and some parts are omitted in the drawing.
FIG.2 is an enlarged longitudinal sectional view of an infrared sensing control device of the supersonic jet burner, which is omitted in FIG.1.
FIG.3 is a schematic cross-sectional view illustrating structural features of the main part of the supersonic jet burner.
FIG.4 is a block diagram illustrating the whole control system including a centralized control means.

[Best Preferred Embodiments by the Present Invention]

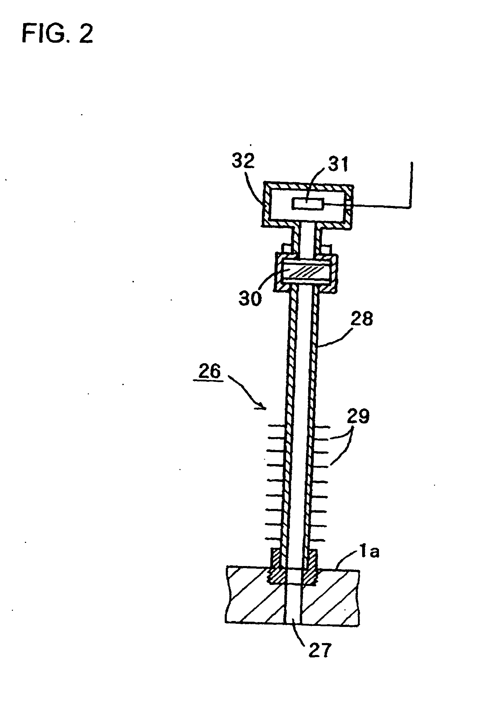

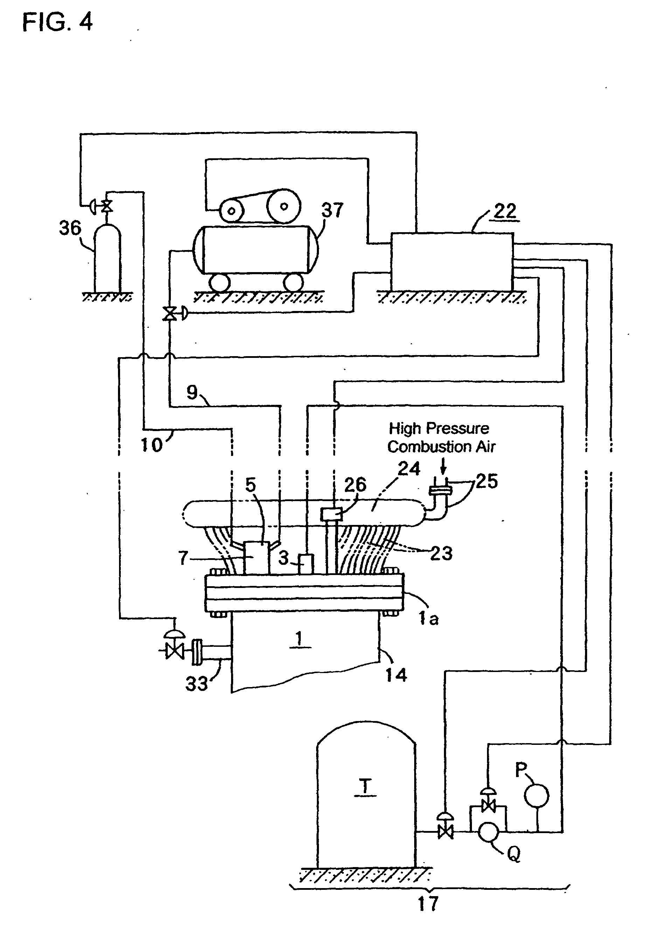

Hereinafter an embodiment by the present invention is explained as referring to drawings.
A reference numeral "1" is a cylindrically formed burner main body having a combustion path 2 arranged along a central axis 1-1 A reference numeral "3" is a fuel filling nozzle unit arranged in the center of a three-layered circular base plate 1a as a base of the burner main body 1. A tip nozzle 3a of the fuel filling nozzle unit 3 is formed into radial slit holes and arranged to face a base of the combustion path 2. A reference numeral "4" is a first combustion chamber capable of forming a swirling combustion flow section X positioned ahead of the tip nozzle 3a of the fuel filling nozzle unit 3. A reference "5" is an ignition nozzle unit positioned outside of the fuel filling nozzle unit 3 and arranged through the circular base plate 1a. An ignition wire 6 is arranged along a longitudinal direction of the ignition nozzle unit 5. A cylindrical body 7 is arranged outside of the base plate 1a so as to surround the ignition wire 6, which is connected to an ignition plug 8 arranged on the top of the ignition nozzle unit 5. In addition, an auxiliary air supplying pipe 9 and a supplying pipe 10 for an ignition gas such as a propane gas are connected around the periphery of the cylindrical body 7 so that the cylindrical body functions as a chamber for mixing the auxiliary air and the ignition gas. Via a hole pierced through the circular base plate 1a, the cylindrical body 7 is connected to a curved pipe 12 positioned inside of the circular base plate 1a in the combustion path 2. An opening end 5a of the ignition nozzle unit 5 is arranged to face toward the tip nozzle 3a of the fuel filling nozzle unit 3, so that fuel from the tip nozzle can be ignited more easily and ignited flare can be prevented from extinguishing by a window pressure of the swirling combustion flow section X in the first combustion chamber 4. The mixed ignition gas with air in the ignition nozzle unit 5 is ignited by electrical sparks between the tip of the ignition wire 6 connected to the ignition plug 8 and the curved pipe 12 so that the flare is generated, as a result, fuel supplied from the tip of the nozzle unit 3 can be ignited by the generated flare. A reference numeral "13" is a plurality of insulators which support and insulate the ignition wire 6 of the ignition nozzle unit 5.
As the circular base plate 1a of the burner main body 1 has the three-layered structure, a cylindrical body unit 14 has also a three-layered structure surrounding the combustion path 2 along the central axis, consisting of an inner cylindrical body 14a, an intermediate cylindrical body 14b and an outer cylindrical body 14c. The tip of the intermediate cylindrical body 14b is shorter than the other cylindrical bodies 14a and 14c so that a cutout portion 16 is formed, and as a result a high pressure air passage 15 is formed between the cylindrical bodies 14c and 14b and between the cylindrical bodies 14b and 14a for passing high pressure air from the outside to the inside of the cylindrical body unit 14. Respective tips of these cylindrical bodies 14a, 14b and 14c are bent inwardly so that a narrowly drawn shock wave conversion section Z is formed in the combustion path 2. Tips of the cylindrical bodies 14a and 14c are attached to a circularly formed tip plate 1b.
The high pressure air passage 15 is connected to a plurality of circular air flowing holes 18 uniformly pierced through corresponding positions of the circular base plate 1a with a predetermined pitch. A plurality of tilted holes 19 corresponding to first air ejecting ports A are formed in the circular base plate 1a around the outer periphery of the first combustion chamber 4 ahead of the tip nozzle 3a of the fuel filling nozzle unit 3 so that the swirling combustion flow section X can be formed. Further, ahead of the first combustion chamber 4, a plurality of tilted holes 20 corresponding to second air ejecting ports B with a uniform pitch are formed around the inner periphery of the inner cylindrical body 14a of the cylindrical body unit arranged around the outer periphery of the first combustion chamber 4, so that a whirling high temperature combustion section Y can be formed. A highly pressured second combustion chamber 21 is formed ahead of the whirling high temperature combustion section Y. The narrowly drawn shock wave conversion section Z is formed ahead of the second combustion chamber 21.
High pressure air importing pipes 23 connected the respective air flowing holes 18 formed in the circular base plate 1a are arranged outwardly and are connected to an air distribution circular pipe unit 24 led to an air inlet pipe 25 as shown in FIG.4. The air inlet pipe 25 is connected to a high pressure combustion air supply means (not shown in the drawings) consisting of a tank and a pump capable of generating required highly pressured air.
A reference numeral "26" shows an infrared sensing control device. One end of a pressure-tight pipe 28 of the infrared sensing control device 26 is fixed to a hole 27 formed in the base plate 1a adjacent to the fuel filling nozzle unit 3 as shown in FIG.2. Heat radiating plates 29 are arranged on the pressure-tight pipe 28 and the other end of the pressure-tight pipe 28 is connected to a transparent heat resistant glass 30. A sensing device 32 having an infrared sensor 31 therein is connected to the heat resistant glass 30. Only infrared rays are sensed by the sensor 31 and sensed signals are transmitted to a centralized control means 22 (see FIG.4) so that warning signals or operating instructions are issued according to a judged result whether detected signals indicate a critical temperature or not in order to control the supersonic jet burner.

A reference numeral "33" shows emergent heated air discharging pipes arranged at more than one on desired positions around the outer periphery of the cylindrical body unit 14. The emergent heated air discharging pipes 33 are connected to the cylindrical bodies via an opening end 33a facing to the high pressure air passage 15, which enable the emergent heated air discharging pipe 33 to cope with an emergent situation by activating a special electromagnetic valve arranged on the top of the pipe. In other words, when a burning state in the combustion path 2 is in an emergent sate, when an abnormal situation occurs during a crushing operation or the like, the supersonic jet burner is driven into an open sate to the atmosphere by activating the special electromagnetic valve, so that highly pressured air flowing in the high pressure air passage 15 is immediately discharged out of the cylindrical body unit 14 and air supply to the combustion path 2 can be stopped.

A reference numeral "34" is screws arranged on outer peripheral portions of the base plate 1a to fix three-layered structure monolithically. A reference numeral "35" is a horn formed ejecting beak corresponding to a jet burner hole formed at a tip opening of the burner main body 1. A plurality of slant grooves can be formed on the inner surface of the ejecting beak so as to give whirling flows to the shock wave, if necessary.

It is preferable to wind metal wires 38 or to form protrusions (not shown) around the outer surface of the inner cylindrical body 14a in order to generate turbulent flows in highly pressured and heated introduced air in the high pressure air passage 15 for energizing the introduced air more and in order to reinforce the inner cylindrical body 14a.

Hereinafter, effects of the present invention are explained based on the above-mentioned arrangements.

Required fuel, for example petroleum, heavy oil or the like, is supplied via the fuel filling nozzle unit 3 at a predetermined rate. In this case the fuel is supplied via fuel supply means 17 comprising a fuel tank T, a supply pump P, a pressure regulator Q and the like under the control of the centralized control means 22 (see FIG. 4).

The ignition plug 8 generates electric sparks and ignites the mixed gas. The ignited gas, obtained as the ignition flare, ignites the fuel ejected from the tip 3a of the fuel filling nozzle unit 3, so that a temperature in the first combustion chamber is rapidly raised.

Highly heated and pressured combustion air supplied from the high pressure combustion air supply means is supplied to the air distribution circular pipe unit 24.

The supplied air is equally divided corresponding to the arranged number of the high pressure air importing pipes 23 by the air distribution circular pipe 24 and supplied to the high pressure air passage 15 via the air flowing holes 18 of the base plate 1a. A portion of the supplied air, as primary air, enters the tilted holes 19 corresponding to first air ejecting ports A and is ejected into the first combustion chamber 4. Combustion gas ejected from the tip 3a is converted into whirling flows at the swirling combustion flow section X so that a temperature in the combustion path 2 is rapidly raised.

The tilted holes 20 corresponding to second air ejecting ports B are opened in the inner wall of the cylindrical body 14a ahead of the first combustion chamber 4, so that highly pressured air flows passing through the high pressure air passage 15 formed between the outer/inner cylindrical bodies 14c, 14a and the intermediate cylindrical body 14b is in a sufficiently heated sate, as a result the whirling high temperature combustion section Y can be formed inside of the second air ejecting ports B, where the whirling flows of the highly heated and pressured air are enhanced. Expanded combustion gas in an ultimately heated and pressured state is generated in the second combustion chamber 21 ahead of the whirling high temperature combustion section Y. The generated combustion gas in the second combustion chamber 21 is compressed abruptly in the narrowly drawn shock wave conversion section Z formed ahead so that the combustion gas flows at a speed beyond the sonic speed and is converted into shock waves. Finally jet streams corresponding to shock waves in a low temperature range can be obtained from the horn formed ejecting beak 35 at the tip of the supersonic jet burner.

Examples by the present invention are explained in more detail.

Although, either gas fuel or liquid fuel can be used as the fuel supplied from the fuel filling nozzle unit 3, the liquid fuel is selected as the fuel in the present explanation. The fuel is supplied at a filling pressure from $10kg/cm^2$ to $40kg/cm^2$ (preferably from $20kg/cm^2$ to $40kg/cm^2$) and preferably at a filling rate of around 20 l.

As shown in FIG.4, a propane gas bomb 36 and a compressor 37 are connected to the ignition nozzle unit 5. A high voltage, for example, 30,000V set and controlled by the centralized control means 22 is supplied to the ignition plug 8 and the mixed gas is ignited by electric sparks generated from the ignition wire 6 for forming the flare, which enables to ignite the fuel from the fuel filling nozzle unit 3. Air from the high pressure combustion air supply means is supplied to the air distribution circular pipe unit 24 after setting supplying conditions by the centralized control means 22. The compressed air should be supplied to the air flowing holes 18 of the cylindrical burner main body 1 at a pressure of at least 10kg/cm$^2$ or preferably more.

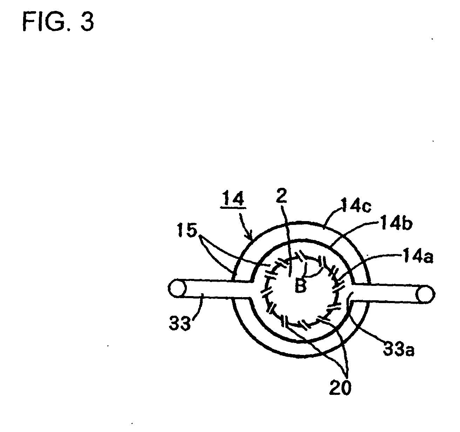

In addition, a plurality of the tilted holes 19 corresponding to first air ejecting ports A should be arranged radially in the form of a nozzle on the outer periphery of the first combustion chamber 4 as shown in FIG.3 in order to hold a longer combustion distance and a longer combustion duration as well as to supply the fuel more effectively.

Further, a plurality of the tilted holes 20 corresponding to second air ejecting ports B are arranged in the form of a nozzle with a deviated angle of 30 degree against the central axis 1-1 toward the second combustion chamber 21 and are tilted toward ahead of the second combustion path 2 with an angle of 10 degree, so that the whirling flows of the combustion gas are forcibly enhanced and finally the combustion gas flows at the whirling high temperature combustion section Y can acquire a flow rate of at least 16.3 m/s.

Since the high pressure air passage 15 at first runs a gap between the outer cylindrical body 14c and the intermediate cylindrical body 14b from the circular base plate 1a to the end plate 1b, then turns in the opposite direction at the cutout portion 16 and finally runs a gap between the intermediate cylindrical body 14b and the inner cylindrical body 14a, the supplied air is heated mainly by the inner cylindrical body 14a which is heated by the whirling highly heated combustion gas in the combustion path 2 and additionally by the intermediate cylindrical body 14b. In other words, the heat exchange between the supplied air and the cylindrical bodies is carried out effectively, so that the supplied air from the second air ejecting ports B ejected to the combustion path 2 keeps its temperature in an optimally high state.

The infrared sensing control device 26 and the emergent heated air discharging pipe 33 of the supersonic jet burner arranged to work mutually under the control of the centralized control means 22, such that the fuel supply is immediately stopped and highly heated combustion gas flowing in the cylindrical burner main body 1 is discharged out of the burner by activating the special electromagnetic valve of the emergent heated air discharging pipe 33, and alarming sounds, alarming lights and the like are generated in order to prevent the burner main body 1 from being broken and also fires due to flames from flammable objects treated by the shock waves can be prevented beforehand.

Hereinafter operations of the supersonic jet burner are explained as referring to numerical data.

Kerosene is used as the fuel for the burner and is supplied from the fuel filling nozzle unit 3 with a pressure of 10kg/cm$^2$ at a rate of 20 l per hour.

Air for the combustion with a pressure of 10kg/cm$^2$ is supplied to the air flowing holes 18 and the high pressure air passage 15, and ejected into the first combustion chamber 4 via the first air ejecting ports A of the tilted holes 19 as a primary air supply.

A temperature in the first combustion 4 is rapidly raised up to 900 to 1,000°C, particularly in the swirling combustion flow section X.

The combustion gas in the swirling combustion flow section X flows ahead whirlingly in the combustion path 2 as its temperature being raised. Then combustion gas is forcibly accelerated its whirling motion by the highly heated and pressured air ejected from the second ejected ports B of the tilted holes 20 and is raised its temperature rapidly at the whirling high temperature combustion section Y, and finally the combustion gas is heated up to more than 1300°C at the narrowly drawn shock wave conversion section Z, as a result, the flow rate of the combustion gas exceeds the sonic speed.

Hereinafter the above-mentioned combustion steps are explained by using calculations based on the numerical data. The supplied 20 l of the kerosene weighs 18kg, provided the specific weight of the kerosene is 0.9. Provided 1kg of the kerosene is burned by 10m$^3$ of air, total amount of supplied air is: $10m^3 \times 18 = 180m^3$.

An expanded volume of the combustion gas heated up to 1300°C per hour is calculated as follows:

$$180m^3 \times (273+1300)/273 = 1037m^3/h.$$

Therefore an exhausted combustion gas volume per second is:

$$(1037m^3/h)/3600s = 0.29m^3/s.$$

Provided an inner diameter of the ejecting beak 35 is 2.0cm, a speed of the combustion gas at the ejecting beak 35 is calculated as follows:

$$(0.29m^3/s)/(0.01m)^2 \times \pi = (0.29m^3/s)/0.000314m^2$$

$$= (29000m/s)/314$$

$$= 923.56m/s.$$

If the speed of the combustion gas at the ejecting peak is expressed in Mach number, the number is as follows:

$$(923.56m/s)/(340m/s) = 2.71 \text{ (Mach)}.$$

Consequently, very strong shock waves having a supersonic speed of 2.71 Mach can be ejected from the ejecting beak 35.

The cylindrical body unit 14, the circular base plate 1a and the small circular tip plate 1b comprised in the cylindrical burner main body 1 can be made of stainless steel or carbon steel, when the temperature of the combustion gas is around 1300°C. If the temperature is more than 1300°C, for example, zirconium metal can be used as a material for the burner main body.

Since the cylindrical body unit 14 can be formed in a relatively short length due to the fact that a combustion path length of the combustion gas can be enlarged and extended by whirling movements of the combustion gas caused by the following features of the burner: the size of the combustion path consisting of the swirling combustion flow section X of the first combustion chamber 4; the size of the second combustion chamber 21; and the size and length of the whirling high temperature combustion section Y, it is important to form a burner having a necessary and sufficient shape.

[Possibilities for Industrial Use]

According to the present invention, the sufficiently enough combustion path length of the combustion gas can be obtained by forming the swirling combustion flow section corresponding to the first combustion chamber together with the whirling high temperature combustion section in the combustion path, so that the combustion gas with a high temperature can be obtained more effectively. Since the first air ejecting ports are formed uniformly around the outer periphery of the fist combustion chamber in order to generate whirling movements of the combustion gas, a combustion efficiency of the combustion gas can be raised. And since the second air ejecting ports are formed as the tilted holes ahead of the second combustion chamber in order to eject highly heated and pressured whirling air after heated in the multi-layered air passage, heating the combustion gas can be effectively enhanced in the swirling combustion flow section of the combustion path.

The flowing speed of the combustion gas is converted into shock waves with a supersonic speed by the narrowly drawn shock wave conversion section. The converted shock waves can be ejected outside from the tip of the jet burner hole.

If the flowing speed of the jet burner is set at a speed under the sonic speed, the jet burner can be used as an ordinary burner.

Since shock waves can be obtained at a relatively low temperature by the present invention, the jet burner can be used to dry, to crush and to pulverize wastes, bio-garbage, garbage, sludge, strained lees of brewery and spirits, excretions of the livestock and the like, and can be used to crush almost all objects such as rocks, shell fossils, shells and the like. Since the jet burner by the present invention does not emit pollutant such as dioxin, it can be safely employed. Further, since the jet burner by the present invention consumes relatively small amount of fuel and can use any type of the fuel, it can be widely utilized.

**Claims**

1. A supersonic jet burner comprising:

   a cylindrical burner main body having a combustion path on its central axis;
   a fuel filling nozzle unit arranged at a base of said burner main body, wherein a tip nozzle of said nozzle unit is arranged to face a base of said combustion path;
   a first combustion chamber formed ahead of said nozzle unit;
   a plurality of first air ejecting ports circularly arranged so as to surround said first combustion chamber and facing to said combustion path so as to form a swirling combustion flow section;
   a circularly arranged plurality of second air ejecting ports capable of ejecting whirling flows of high pressure air heated in a high pressure air flowing passage formed around the outer periphery of said burner main body so as to form a whirling high temperature combustion section;
   a second combustion chamber arranged ahead of said whirling high temperature combustion section;
   a narrowly drawn shock wave conversion section for raising a flow rate of combustion gas up to more than the sonic speed formed as a tip hole of said circular burner main body.

2. The supersonic jet burner according to claim 1, wherein:

   an ignition nozzle unit capable of introducing ignition gas and auxiliary air having an ignition plug is arranged in said first combustion chamber and the tip of said ignition nozzle unit is bent directing to the tip of said fuel filling nozzle unit so as to eliminate influence from said swirling combustion flow section.

3. The supersonic jet burner according to claim 1, wherein:

   said base of said burner main body is formed as a circular base plate to which a plurality of air importing pipes are attached outwardly;
   the other ends of said air importing pipes are communicated with an air distribution circular pipe unit which is connected to a high pressure combustion air supply means; and
   said circular base plate is connected to a high pressure air passage arranged around a cylindrical portion of said burner main body so as to eject required respective amounts of supplied air to said air passage from said first air ejecting ports and second air ejecting ports respectively.

4. The supersonic jet burner according to claim 3, wherein:

said cylindrical portion of said burner main body comprises an inner cylindrical body having said combustion path, an intermediate cylindrical body and an outer cylindrical body; said high pressure air passage runs a gap between said inner cylindrical body and said intermediate cylindrical body, then runs a gap between said intermediate cylindrical body and said outer cylindrical body via a cutout portion of said intermediate cylindrical body; wherein:

high pressure air in said high pressure air passage receives heat from highly heated combustion gas in said combustion path so that heated high pressure air by the heat exchange can be ejected from said second air ejecting ports ahead of said first combustion chamber as highly heated and pressured combustion air.

5. The supersonic jet burner according to claim 1 or claim 3, wherein:

plurality of said first and second air ejecting ports are arranged around said combustion path with respectively uniform pitches and said air ejecting holes are formed as tilted holes in the form of nozzle directing ahead.

# FIG. 1

FIG. 2

FIG. 3

## FIG. 4

High Pressure
Combustion Air

## INTERNATIONAL SEARCH REPORT

| International application No. |
| --- |
| PCT/JP03/06884 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | Microfilm of the specification and drawings annexed to the request of Japanese Utility Model Application No. 190060/1981(Laid-open No. 93610/1983) (Osaka Gas Co., Ltd.), 24 June, 1983 (24.06.83), Full text; Figs. 1 to 2 (Family: none) | 1-5 |
| A | JP 01-150709 A  (Shinagawa Refractories Co., Ltd.), 13 June, 1989 (13.06.89), Full text; Figs. 1 to 2 (Family: none) | 1-5 |

Form PCT/ISA/210 (continuation of second sheet) (July 1998)

## INTERNATIONAL SEARCH REPORT

| International application No. |
|---|
| PCT/JP03/06884 |

**A. CLASSIFICATION OF SUBJECT MATTER**
Int.Cl$^7$ F23D14/22

According to International Patent Classification (IPC) or to both national classification and IPC

**B. FIELDS SEARCHED**

Minimum documentation searched (classification system followed by classification symbols)
Int.Cl$^7$ F23D14/02, F23D14/22, F23D14/24

Documentation searched other than minimum documentation to the extent that such documents are included in the fields searched

| | | | |
|---|---|---|---|
| Jitsuyo Shinan Koho | 1940–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 11-82940 A (Tetsuto TAMURA), 26 March, 1999 (26.03.99), Full text; Fig. 1 (Family: none) | 1–5 |
| A | Microfilm of the specification and drawings annexed to the request of Japanese Utility Model Application No. 68157/1983(Laid-open No. 175845/1984) (Osaka Gas Co., Ltd.), 24 November, 1984 (24.11.84), Full text; Figs. 1 to 4 (Family: none) | 1–5 |

[X] Further documents are listed in the continuation of Box C.　　[ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 September, 2003 (02.09.03) | 24 September, 2003 (24.09.03) |

| Name and mailing address of the ISA/ | Authorized officer |
|---|---|
| Japanese Patent Office | |
| Facsimile No. | Telephone No. |

Form PCT/ISA/210 (second sheet) (July 1998)